# EUROPÄISCHE PATENTANMELDUNG

(11) **EP 2 587 092 A2**
(43) Veröffentlichungstag der Anmeldung: **01.05.2013**
(21) Anmeldenummer: 12007256.6
(22) Anmeldetag: 22.10.2012
(51) Int. Cl.: F16G 13/08

(54) **Flyerkette**

(30) Priorität: 24.10.2011 DE 102011116700
(71) Anmelder: Rexnord Kette GmbH, 57518 Betzdorf (DE)
(72) Erfinder: Holschbach, Franz-Josef, 57584 Wallmenroth (DE); Steup, Ralf, 57518 Betzdorf (DE); Baumeister, Peter, 57555 Brachbach (DE); Gerlach, Ulrich, 57537 Wissen (DE); Heuer, Jörg, 57518 Betzdorf (DE); Lindemaier, Jörg, 58239 Schwerte (DE)
(74) Vertreter: Tilmann, Max Wilhelm

(57) **Zusammenfassung**

Die Erfindung betrifft eine Flyerkette mit Außen-, Innen- und Zwischenlaschen (2, 3, 4) sowie einem Kettenbolzen (1), wobei eine Einzelschnürung der Außen-, Innen- und Zwischenlaschen vorliegt, und zwischen Kettenbolzen und Außenlaschen eine Spielpassung vorliegt.

## Beschreibung

Die Erfindung betrifft eine Flyerkette.

Eine Flyerkette, die auch als Laschenkette bezeichnet wird, ist ein sicherheitsrelevantes Bauteil, das eine Lastkette bzw. Sicherheitshubkette ist, die üblicherweise als Zugorgan zur Umlenkung von Kräften dient. Die Flyerkette wird in Verbindung mit hydraulisch betätigten Zylindern oder als Gegengewichtskette eingesetzt. Sie gewährleistet eine hohe Tragkraft bei Hebezeugen und findet die weiteste Verbreitung bei den Hubmasten von Gabelstaplern. Eine weitere wichtige Funktion erfüllt sie auch als Gegengewichtskette bei Werkzeugmaschinen sowie als Hubkette in Container-Hubwagen.

Eine Flyerkette besteht aus Kettenbolzen und Laschen, bei denen man üblicherweise zwischen Außen-, Innen- und Zwischenlaschen unterscheidet, wobei die Laschen auf die Kettenbolzen in Anordnungen aufgereiht werden, die beispielsweise durch Normen wie die ISO 4347 vorgegeben sind.

Jedes Kettenglied einer Flyerkette setzt sich aus Außenlaschen und Innenlaschen bzw. Zwischenlaschen zusammen, die durch den Kettenbolzen unter Ausbildung eines Drehgelenks gelenkig miteinander verbunden sind. Innenlaschen und Zwischenlaschen unterscheiden sich dadurch, dass Zwischenlaschen auf Kettenbolzen einer Außenlaschen und Innenlaschen auf Kettenbolzen zweier aufeinanderfolgender Außenlaschen angeordnet sind. Die Außenlaschen besitzen üblicherweise einen Presssitz, wobei zusätzlich die in die Außenlaschen eingepressten Kettenbolzen vernietet werden können. Es besteht zwischen dem Kettenbolzen und den Außenlaschen eine Presspassung. Um die Gelenkigkeit zu gewährleisten, werden die Zwischenlaschen und insbesondere die Innenlaschen üblicherweise mit einem Schiebesitz versehen, so dass eine Spielpassung zwischen dem Kettenbolzen und den Innen- bzw. Zwischenlaschen vorliegt. Eine derartige Flyerkette ist aus DE 34 31 317 C2 bekannt.

Die Verschleißlebensdauer einer Flyerkette ist von vielen Faktoren abhängig, wie beispielsweise der Reibung im Kettengelenk, die beispielsweise durch die Schmierung, Anzahl der Gelenkbewegungen und der Gelenkflächenpressung beeinflusst wird.

Aufgabe der Erfindung ist es, die Lebensdauer von Flyerketten durch die Verminderung des Verschleißes im Gelenk, zu erhöhen.

Ausgehend von dieser Aufgabenstellung wird erfindungsgemäß eine Flyerkette gemäß Patentanspruch 1 vorgeschlagen, deren Lebensdauer erhöht ist.

Die Erfindung geht von dem Grundgedanken aus, dass entgegen der bisherigen Vorstellung und entgegen der bisher geltenden Norm, eine Einzelschnürung der Laschen der Flyerkette vorliegt. Unter Einzelschnürung wird hier verstanden, dass es keine zwei eng nebeneinander angeordneten Zwischen- bzw. Innenlaschen gibt, die auf den gleichen Kettenbolzen angeordnet sind. Zwischen- und Innenlasche wechseln sich quer zur Längserstreckung der Flyerkette auf einem Kettenbolzen ständig ab. Durch die Anordnung der Laschen in Einzelschnürung wird die Zugkraft auf den Kettenbolzen sehr gleichmäßig auf die Kettenbolzenlänge verteilt, so dass lokale Spannungsspitzen, die zu einem erhöhten Verschleiß führen, deutlich reduziert werden. Die sich ergebende Erhöhung der Verschleißlebensdauer geht mit einer Vergrößerung der Festigkeit der Flyerkette einher. Eine Einzelschnürung erlaubt zudem eine Skalierung der Kettenbreite, so dass der für die zu erwartende Belastung tatsächlich erforderliche Laschenquerschnitt unter hoher Auslastung bereitgestellt werden kann. Durch die optimierte Skalierung kommt es bei der Anwendung der Flyerkette an einem Hubmast eines Gabelstaplers zu einer minimalen Sichtbeeinträchtigung des Gabelstaplerfahrers, da die im Gesichtsfeld angeordnete Flyerkette schmaler ausgestaltet werden kann.

Es hat sich weiter überraschend gezeigt, dass durch die Überwindung der bisher herrschenden Norm nunmehr eine Einzelschnürung vorzusehen, die Gelenkflächenpressung verkleinert werden kann, was zu einer Erhöhung der Verschleißlebensdauer führt. Die Gelenkflächenpressung ist der Quotient aus Kettenzugkraft und Gelenkfläche, die eine rechnerische Größe darstellt, die die projizierte Fläche des Kettenbolzens auf die Innenlaschenbohrungen abbildet. Damit ergibt sich die Gelenkfläche als Produkt aus dem Kettenbolzen-Durchmesser, der Laschendicke und der Anzahl der beweglichen Innenlaschen. Durch die Verminderung der Anzahl der Zwischenlaschen kann die Gelenkfläche erhöht werden.

Zwischen Kettenbolzen und Außenlaschen der Flyerkette liegt eine Spielpassung vor. Durch die Spielpassung kann sich die Biegung des Kettenbolzens bei einer Querkraftbeanspruchung durch die auf ihn wirkenden Laschen erheblich reduzieren. Durch die Drehbarkeit des Kettenbolzens im Kettengelenk wird die Gelenkfläche um jene vergrößert, die sonst der Kettenbolzen üblicherweise im Presssitz und an den Zwischenlaschen verbrauchte. Ferner ist durch die Drehbarkeit des Kettenbolzens die für Verschleiß zur Verfügung stehende Fläche auf die gesamte Mantelfläche des Kettenbolzens vergrößert. Die Verschleißlebensdauer der Flyerkette wird weiter erhöht.

Die Einzelschnürung erlaubt bei geringer Bauteilevielfalt die Generierung einer Skalierung der Leistung über die Anzahl der auf dem Bolzen wechselseitig angeordneten Laschen.

Bevorzugt weisen alle Laschen der Flyerkette die gleiche Geometrie auf hinsichtlich der Teilung (Abstand der Mittelpunkte der Durchgangsöffnungen einer Außenlasche für die Kettenbolzen) und des Durchmessers der Laschendurchgangsöffnung für den Kettenbolzen. Hierdurch kann die Flyerkette einfacher hergestellt werden, indem alle Laschen der Flyerkette gleich ausgestaltet sind.

Vorzugsweise kann die axiale Sicherung des Kettenbolzens durch ein axiales Sicherungselement erreicht werden. Das axiale Sicherungselement kann als eine Klemmscheibe, eine Federscheibe oder durch plastische Verformung der Kettenbolzenenden realisiert werden.

Die Erfindung wird nachfolgend anhand eines in der Zeichnung dargestellten Ausführungsbeispiels näher erläutert. In der Zeichnung zeigt:

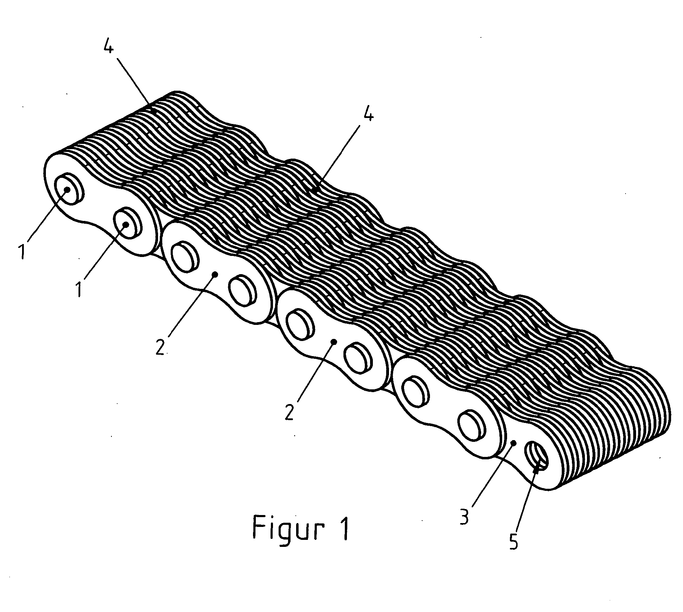

Fig. 1: eine isometrische Darstellung einer erfindungsgemäßen Flyerkette.

Fig. 1 zeigt schematisch eine erfindungsgemäße Flyerkette. Die Flyerkette weist Kettenbolzen 1 und darauf aufgereihte Laschen auf.

Bei den Laschen handelt es sich um Außenlaschen 2 und Innenlaschen 3 sowie Zwischenlaschen 4. Die Außenlaschen 2 begrenzen die Flyerkette seitlich nach außen. Die Zwischenlaschen 4 sind Laschen, die auf den gleichen Kettenbolzen 1 einer Außenlasche 2 angeordnet sind. Die Innenlaschen 3 sind mit ihren Durchgangsöffnungen 5 so auf der Flyerkette aufgereiht, dass sie je einen Kettenbolzen 1 von zwei aufeinander folgenden Außenlaschen 2 aufnehmen.

Bei der erfindungsgemäßen in Figur 1 dargestellten Flyerkette sind die Außenlaschen 2, Zwischenlaschen 4 und Innenlaschen 3 in Einzelschnürung auf den Kettenbolzen 1 aufgereiht.

Bei dem Ausführungsbeispiel in Figur 1 liegt zwischen den Kettenbolzen 1 und den Außenlaschen 2 eine Spielpassung vor. Die Kettenbolzen 1 sind durch ein durch eine plastische Verformung der Kettenbolzenenden ausgestaltetes axiales Sicherungselement an der Außenlasche 2 gesichert.

In dem in Figur 1 dargestellten Ausführungsbeispiel weisen die Zwischenlaschen 4, Innenlaschen 3 und Außenlaschen 2 die gleiche Geometrie, insbesondere hinsichtlich Teilung und Durchmesser der Durchgangsöffnung 5 auf. Die Zwischenlaschen 4, Innenlaschen 3 und Außenlaschen 2 sind gleich ausgestaltet.

## Patentansprüche

1. Flyerkette mit Außen-, Innen- und Zwischenlaschen (2, 3, 4) sowie einem Kettenbolzen (1), **gekennzeichnet durch** eine Einzelschnürung der Außen-, Innen- und Zwischenlaschen (2, 3, 4), wobei zwischen Kettenbolzen (1) und Außenlaschen (2) eine Spielpassung vorliegt.

2. Flyerkette nach Anspruch 1, **dadurch gekennzeichnet, dass** die Außenlaschen (2) und Innenlaschen (3) die gleiche Geometrie aufweisen.

3. Flyerkette nach Anspruch 2, **dadurch gekennzeichnet, dass** die Zwischenlaschen (4) die gleiche Geometrie wie die Innenlaschen (3) aufweisen.

4. Flyerkette nach einem der Ansprüche 1 bis 3, **dadurch gekennzeichnet, dass** der Kettenbolzen (1) durch ein axiales Sicherungselement an der Außenlasche (2) gesichert ist.
